(19) Europäisches Patentamt
European Patent Office
Office européen des brevets

(11) Veröffentlichungsnummer: **0 580 253 A2**

# (12) EUROPÄISCHE PATENTANMELDUNG

(21) Anmeldenummer: **93202155.3**

(51) Int. Cl.5: **G11B 27/13**, //G11B27/34

(22) Anmeldetag: **13.07.93**

(30) Priorität: **22.07.92 DE 4224115**

(43) Veröffentlichungstag der Anmeldung: **26.01.94 Patentblatt 94/04**

(84) Benannte Vertragsstaaten: **AT DE ES GB**

(71) Anmelder: **Philips Patentverwaltung GmbH**
**Wendenstrasse 35c**
**D-20097 Hamburg(DE)**
(84) **DE**

(71) Anmelder: **PHILIPS ELECTRONICS N.V.**
**Groenewoudseweg 1**
**NL-5621 BA Eindhoven(NL)**
(84) **ES GB AT**

(72) Erfinder: **Kloster, Frieder**
**c/o Philips Patentverwalt. GmbH,**
**Wendenstrasse 35c**
**D-20097 Hamburg(DE)**

(74) Vertreter: **von Laue, Hanns-Ulrich, Dipl.-Ing. et al**
**Philips Patentverwaltung GmbH**
**Wendenstrasse 35c**
**D-20097 Hamburg (DE)**

## (54) Verfahren zur Ermittlung der Spielzeit eines Magnetbandes und Vorrichtung hierfür.

(57) Es wird ein Verfahren und eine Vorrichtung zur Ermittlung der Gesamtspielzeit $T_G$ und Restspielzeit $T_R$ eines in einer Kassette (1) auf zwei Spulen (2, 3) bevorrateten Magnetbandes (4) vorgeschlagen. Dabei werden durch kurzzeitiges Umspulen des Magnetbandes (4) die Anzahl von Tachoimpulsen ($i_1$, $i_2$) an der Aufwickelspule (3) und Abwickelspule (2) ermittelt. Durch Herausziehen des Magnetbandes (4) aus der Kassette (1) um eine vorgegebene Länge ($L_H$) werden ferner die Anzahl von Tachoimpulsen ($j_1$, $j_2$) an der Auf- und Abwickelspule (2, 3) bestimmt. Aus den erhaltenen Werten dieser Impulse ($i_1$, $i_2$, $j_1$, $j_2$) kann bei vorgegebener Dicke d und Geschwindigkeit v des Magnetbandes (4), vorgegebenem Kerndurchmesser K der Auf- und Abwickelspule (2, 3) und vorgegebener Anzahl von Impulsen u pro Spulenumdrehung die Gesamtspielzeit $T_G$ nach der Beziehung:

$$T_G=\frac{\pi}{4dv}\left[\left(\frac{uL_H}{\pi(i_1j_2+i_2j_1)}\right)^2(i_1^2+i_2^2)-2K^2\right]$$

und die verbleibende Restspielzeit $T_R$ nach der Beziehung:

$$T_R=\frac{\pi}{4dv}\left[\left(\frac{uL_Hi_2}{\pi(i_1j_2+i_2j_1)}\right)^2-K^2\right]$$

berechnet werden.

EP 0 580 253 A2

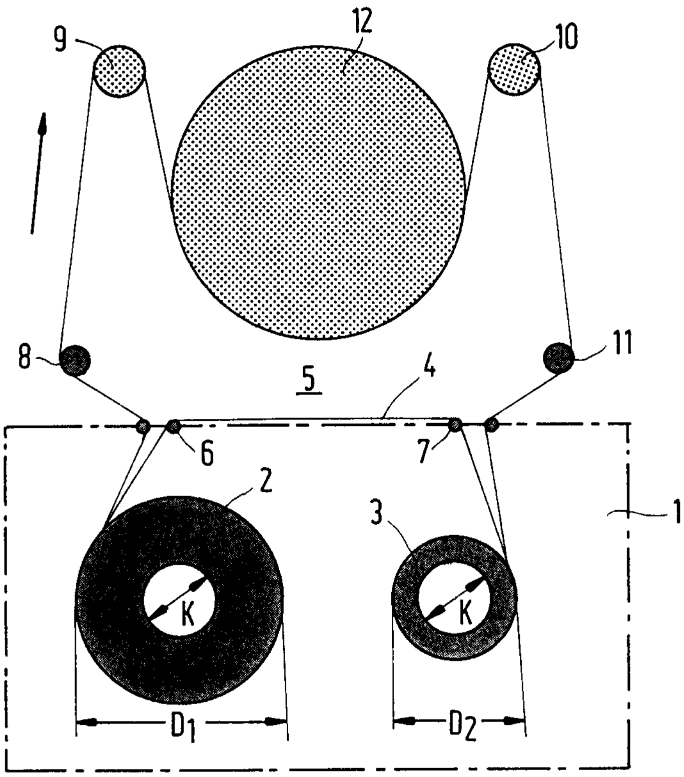


FIG.1

Die Erfindung geht aus von einem Verfahren zur Ermittlung der Spielzeit eines Magnetbandes nach dem Oberbegriff des Patentanspruchs 1.

Aus der DE 28 56 509 A1 ist eine Vorrichtung zur Anzeige derjenigen Bandlänge bekannt, die auf einer Spule einer mit zwei Spulen bestückten Kassette aufgewickelt ist. Bei dieser Vorrichtung zieht ein Lademechanismus eine bestimmte Bandlänge mit konstanter Lineargeschwindigkeit aus der Kassette heraus, wobei eine der beiden Spulen der Kassette festgehalten ist. Ein Impulsgenerator erzeugt dabei eine der Winkelgeschwindigkeit proportionale Impulsfrequenz. Ein Mikroprozessor berechnet anhand der konstanten Lineargeschwindigkeit, der Banddicke und dem Spulendurchmesser die vorliegende Bandmenge. Zur Berechnung der auf der Spule aufgewickelte Bandmenge in einem Zeitmaß $T_S$ wird folgende Gleichung herangezogen:

$$T_S = \frac{v}{4\pi\delta}\left(\frac{1}{P_S^2} - \left(\frac{2\pi R_H}{v}\right)^2\right)$$

wobei v die lineare Geschwindigkeit, $\delta$ die Dicke des Magnetbandes, $P_S$ das die Winkelgeschwindigkeit dieser eine Spule wiedergebene Signal und $R_H$ der Durchmesser der innersten Windung des auf diese Spule aufgewickelten Magnetbandes ist. Nachteilig bei dieser bekannten Vorrichtung ist, daß eine der beiden Spulen durch eine spezielle Bremsvorrichtung festgehalten werden muß.

Ferner ist aus der DE 36 22 595 A1 ein Verfahren zur Ermittlung der Restbandlänge eines auf einem Wickeldorn aufgewickelten Magnetbandes bekannt, bei welchem zunächst mittels einer Zeitmeßeinrichtung die Umdrehungszeiten $t_L$,$t_R$ einer Vollumdrehung der beiden Bandwickel ermittelt wird, aus welchen sodann die Zeitsumme $t = t_L + t_R$ gebildet wird. Anschließend wird durch Vergleich der Zeitsumme t mit einem vorgegebenen Grenzwert der der vorliegenden Kassette zugeordnete Wickeldorndurchmesser $D_O$ bestimmt, der zur Errechnung der Windungszahlen $n_L$ und $n_R$ nach den Beziehungen:

$$n_L = \frac{(t_L \cdot v)/n - D_O}{2 \cdot d}$$

und

$$n_R = \frac{(t_R \cdot v)/n - D_O}{2 \cdot d}$$

herangezogen wird, wobei v die Normgeschwindigkeit und d die Dicke des Magnetbandes ist. Anhand der so erhaltenen Windungszahlen werden nachfolgend die Wickelzeiten $T_L$ und $T_R$ nach den Gleichungen

$$T_L = \frac{(n_L \cdot D_O) + n_L(n_L+1)}{v \cdot 60} n$$

und

$$T_R = \frac{(n_R \cdot D_O) + n_R(n_R+1)}{v \cdot 60} n$$

berechnet. Die Summe der beiden Zeiten $T_L$ und $T_R$ stellt die abgelaufene Restzeit T dar, aus welcher durch Vergleich mit möglichen Sollzeiten die Ist-Dicke

$$d' = \frac{T_{ist}}{T_{soll}} \cdot d$$

des Magnetbandes berechnet wird. Die Ist-Dicke wird schließlich zur Berechnung realer Wickelzeiten herangezogen.

Weiterhin ist aus der US-Patentschrift 4,963,999 bekannt, die verbleibende Restspielzeit T1 nach der Gleichung

$$T1 = \frac{\pi}{tv}\left\{\frac{\frac{L\cdot t}{\pi}+2Ro^2}{1+\left(\frac{Rt}{Rs}\right)^2} - Ro^2\right\}$$

zu berechnen. Hierin bezeichnet t die Dicke, v die Geschwindigkeit und L die Gesamtlänge des Magnetbandes, Ro den Radius des Wickelkernes, Rt den Radius der Aufwickelspule und Rs den Radius der Abwickelspule in der Kassette. Die Geschwindigkeit des Magnetbandes wird über die Winkelgeschwindigkeit einer das Magnetband antreibenden Capstan-Welle ermittelt.

Der vorliegenden Erfindung liegt die Aufgabe zugrunde, ein weiteres Verfahren zur Ermittlung der zur Verfügung stehenden Gesamt- und Restspielzeit eines in einer Kassette auf zwei Spulen bevorrateten Magnetbandes anzugeben.

Diese Aufgabe wird durch die im Patentanspruch 1 angegebenen Merkmale gelöst.

Die erfindungsgemäßen Verfahren nach dem Patentanspruch 1 hat den Vorteil, daß allein aus dem Verhältnis von Wickelimpulsen, die aufgrund eines kurzen Umspulvorgangs und aufgrund eines ohnehin durchzuführenden Fädelvorgangs anfallen, sowohl die Gesamtspielzeit als auch die verbleibende Restspielzeit des auf der Abwickelspule noch befindlichen Magnetbandes mit hinreichender Genauigkeit ermittelt werden kann.

Durch die in den Unteransprüchen aufgeführten Maßnahmen sind vorteilhafte Weiterbildungen und Verbesserungen des im Patentanspruch 1 angegebenen Verfahrens möglich.

In den Unteransprüchen 4 und 5 sind Vorrichtungen zur Durchführung der in den Patentansprüchen 2 und 3 angegebenen Verfahren angegeben.

Ein Ausführungsbeispiel der Erfindung ist in der Zeichnung dargestellt und in der nachfolgenden Beschreibung erläutert. Es zeigen:

- Fig. 1 die schematische Darstellung eines Magnetbandgerätes einer bekannten Ladeinrichtung zum Ein/Ausfädeln eines in einer Kassette bevorrateten Magnetbandes und
- Fig. 2 ein Blockschaltbild zur Erläuterung der erfindungsgemäßen Verfahren.

In der Fig. 1 ist mit 1 eine Magnetbandkassette bezeichnet. Die strichpunktierte Linie gibt schematisch den Umriß der Magnetbandkassette wieder. In der Magnetbandkassette 1 lagert eine Abwickelspule 2 und eine Aufwickelspule 3 für ein Magnetband 4. Der Wickeldurchmesser der Abwickelspule 2 ist darin mit $D_1$, der Wickeldurchmesser der Aufwickelspule 3 mit $D_2$ und der Wickelkerndurchmesser der beiden Spulen mit K bezeichnet. Im Bereich des Kassettenmaules 5 wird das Magnetband 4 von Führungselementen 6 und 7 geführt.

Bei einem Einfädelvorgang wird das in der Kassette 1 bevorratete Magnetband 4 im Bereich des Kassettenmauls 5 von Bandführungselementen 8, 9, 10 und 11 hintergriffen, aus der Magnetbandkassette 1 herausgezogen und teilweise um eine trommelförmige Abtasteinrichtung 12 geschlungen. Derartige Bandladeeinrichtungen sind an sich bekannt (US-Patentschrift 4,807,064) und brauchen daher hier nicht näher erläutert werden.

Zum Transport des Magnetbandes 4 wird sowohl die Abwickelspule 2 und als auch die Aufwickelspule 3 durch jeweils einen (nicht dargestellten) Wickelmotor angetrieben. Die Drehzahl dieser Wickelmotoren wird durch Auswerten von Tacho-Impulsen geregelt, die durch Abtasten von Tachoscheiben erzeugt werden. Die Tachoscheiben sind drehfest mit Achsen der Wickelmotoren verbunden.

Das Blockschaltbild der Fig. 2 zeigt schematisch Tachoscheiben 13 und 14 der Antriebsmotoren für die Abwickelspule 2 und die Aufwickelspule 3. Es sei angenommen, daß eine Teilung auf den Tachoscheiben 13 und 14 so angelegt ist, daß pro Umdrehung durch Abtastung mit Detektoren 15 und 16 400 Tachoimpulse erzeugt werden. Die an einem Ausgang des Detektors 15 abnehmbaren Tachoimpulse zählt

ein nachgeschalteter Zähler 17; die an dem Ausgang des Detektors 16 liegenden Tachoimpulse zählt ein Zähler 18. Die Zählergebnisse an Ausgängen der beiden Zähler 17, 18 gelangen zu Eingängen eines Mikroprozessors 19, welcher - wie nachfolgend noch ausführlich erläutert - sowohl die Gesamtspielzeit als auch die Restspielzeit des auf der Abwickelspule 2 befindlichen Magnetbandes 4 berechnet und die Ergebnisse nach Zwischenspeicherung in einem Speicher 20 auf einer Anzeigevorrichtung 21 zur Darstellung bringt.

Die Art und Weise, in der die Gesamtspielzeit $T_G$ und die Restspielzeit $T_R$ einer Kassette bestimmt werden kann, wird nunmehr unter Bezugnahme auf die Fig. 1 und 2 erläutert. Es sei angenommen, daß der Durchmesser K des Wickelkerns der Abwickelspule 2 gleich dem Durchmesser K des Wickelkerns der Aufwickelspule 3 ist. Ferner sei angenommen, daß der Wickelkerndurchmesser K ebenso bekannt ist wie die Dicke d und die Wiedergabe-Geschwindigkeit v des Magnetbandes. Die Länge $L_S$ des auf einer Spule aufgewickelten Magnetbandes kann durch folgende Gleichung angegeben werden:

$$L_s = \frac{\pi}{4d}(D^2 - K^2) \qquad (1)$$

wobei D der Durchmesser der betrachteten Spule ist.

Die Gesamtspielzeit $T_G$ der Kassette und die auf der Abwickelspule 2 verbleibende Restspielzeit $T_R$ ergibt sich aus der Bandgeschwindigkeit v und der auf den beiden Spulen aufgebrachte Bandlänge $L_{S1}$ und $L_{S2}$:

$$T_G = \frac{L_{S1} + L_{S2}}{v} \qquad (2)$$

$$T_R = \frac{L_{S1}}{v} \qquad (3)$$

Faßt man nun die Gleichungen (1) mit (2) und (1) mit (3) zusammen, so erhält man:

$$T_G = \frac{\pi}{4dv}(D_1^2 + D_2^2 - 2 \cdot K^2) \qquad (4)$$

$$T_R = \frac{\pi}{4dv}(D_1^2 - K^2) \qquad (5)$$

Die in den Gleichungen (4) und (5) enthaltenen Spulendurchmesser $D_1$ und $D_2$ für die Abwickelspule 2 und die Aufwickelspule 3 sind unbekannt. Diese unbekannten Spulendurchmesser können dadurch bestimmt werden, daß nach dem Einlegen der Kassette 1 in den Kassettenschacht eines Magnetbandgerätes eine bestimmte Bandmenge von einer Spule auf die andere umgespult wird. Dabei werden die durch Abtastung der Tachoscheiben 13 und 14 anfallenden Tachoimpulse von den Zählern 17 und 18 gezählt, so daß an dem Ausgang des Zählers 17 ein bestimmter Wert über die Anzahl der abgetasteten Impulse $i_1$ und an dem Ausgang des Zählers 18 ein anderer bestimmter Wert über die Anzahl der Impulse $i_2$ vorliegt. Das Verhältnis der Anzahl der Impulse $i_1$ und $i_2$ ist umgekehrt proportional zu den beiden Spulendurchmessern $D_1$ und $D_2$:

$$\frac{D_1}{D_2} = \frac{i_2}{i_1} \qquad (6)$$

Zur Ermittlung des Verhältnisses der Spulendurchmesser ist lediglich eine kurze Umspulbewegung erforderlich; es genügt eine einzige Spulenumdrehung. Nach dieser kurzen Spulenbewegung wird das Magnetband von den Bandführungselementen 8 bis 11 aus der Kassette 1 herausgezogen und für einen Abtastbetrieb um die trommelförmige Abtasteinrichtung 12 geschlungen. Auch bei diesem Fädelvorgang werden die Tachoscheiben 13 und 14 abgetastet und die dabei von den Detektoren 15 und 16 erzeugten Tachoimpulse von den Zählern 17 und 18 gezählt. An dem Ausgang des Zählers 17 steht nach dem Ausfädelvorgang ein bestimmter Wert über die Anzahl der Impulse $j_1$ und an dem Ausgang des Zählers 18 ein Wert über die Anzahl der Impulse $j_2$. Für die Länge $L_H$ des herausgezogenen Magnetbandes 4 läßt sich folgende Beziehung aufstellen:

$$L_H=\frac{\pi}{u}(j_1 \cdot D_1+j_2 \cdot D_2) \qquad (7)$$

darin ist u die Anzahl der Impulse pro Spulenumdrehung. Da die Teilung der Tachoscheiben bekannt ist, beträgt u = 400. Weiterhin ist aufgrund der mechanischen Abmessungen des Laufwerks und der Ladeeinrichtung des Magnetbandgerätes bekannt, welche Länge $L_H$ des Magnetbandes 4 aus der Kassette herausgezogen werden muß, um die Betriebsstellung anzufahren. Im vorliegenden Fall beträgt die effektive Länge $L_H$ des herausgezogenen Magnetbandes 51 cm.

Durch Auflösen der beiden Gleichungen (6) und (7) erhält man für die beiden Spulendurchmeser $D_1$ und $D_2$:

$$D_1=\frac{u}{\pi}L_H\frac{i_2}{(i_1j_2+i_2j_1)} \qquad (8)$$

$$D_2=\frac{u}{\pi}L_H\frac{i_1}{(i_1j_2+i_2j_1)} \qquad (9)$$

Aus den so gefundenen Gleichungen (4), (5) und (8), (9) können die Gleichungen für die Gesamtspielzeit $T_G$ und die Restspielzeit $T_R$ entwickelt werden:

$$T_G=\frac{\pi}{4dv}[(\frac{uL_H}{\pi(i_1j_2+i_2j_1)})^2(i_1^2+i_2^2)-2K^2] \qquad (10)$$

$$T_R=\frac{\pi}{4dv}[(\frac{uL_Hi_2}{\pi(i_1j_2+i_2j_1)})^2-K^2] \qquad (11)$$

Bei der Aufzeichnung und Wiedergabe von digitalen Videosignalen werden für professionelle Zwecke Magnetbandkassetten in drei verschiedenen Größen verwendet. Die größte dieser Kassetten hat eine Länge von 366 mm, eine Tiefe von 206 mm und eine Breite von 33 mm. In dieser Kassette lagern zwei Bandwickel, deren Durchmesser jeweils 181 mm beträgt; der Kerndurchmesser K jeder Spule beträgt 58 mm. Das in der Kassette bevorratete Magnetband weist eine Banddicke d = 13 $\mu$m auf. Zur weiteren Erläuterung sei angenommen, daß nach dem Einlegen einer derartigen Kassette der kurze Umspulvorgang Impulse $i_1$ = 176 und $i_2$ = 420 an den Ausgängen der Zähler 17 und 18 liefert, wobei pro Spulenumdrehung (u) 400 Impulse erzeugt werden. Durch Herausziehen des Magnetbandes 4 aus der Kassette 1 werden Impulse $j_1$ = 240 und $j_2$ = 340 gezählt; die effektive Länge $L_H$ des Magnetbandes 4, welche aus der Magnetbandkassette (1) herausgezogen wird, beträgt 51 cm. Durch Einsetzen der zuvor erwähnten Konstanten und Variablen in die Gleichung (11) erhält man bei einer Wiedergabegeschwindigkeit von v = 680 mm/s eine Restspielzeit $T_R$ von 37 min und 42 sec und eine Gesamtspielzeit $T_G$ von 40 min und 12 sec. Die so berechneten Werte für die Restspielzeit $T_R$ und die Gesamtspielzeit $T_G$ stellen hinreichend genaue Näherungswerte dar. Das vorliegende Zahlenbeispiel zeigt, das die ermittelten Werte von Sollwerten (Soll-$T_G$ = 40 min, 22 sec) nur um ca. 0,5% abweichen.

Das in dem Mikroprozessor (19) abgelegte Programm zur Verarbeitung der Gleichungen (10) und (11) benötigt als Variable nur die von den Zählern 17 und 18 zur Verfügung gestellten Werte der Impulse $i_1$, $i_2$, $j_1$ und $j_2$. Die übrigen Werte können als Konstanten fest vorgegeben werden.

## Patentansprüche

1. Verfahren zur Ermittlung der Spielzeit eines Magnetbandes (4), welches in einer Magnetbandkassette (1) auf einer Abwickelspule (2) und auf einer Aufwickelspule (3) aufgewickelt ist,

   bei welchem zunächst das auf der Ab- und Aufwickspule (2, 3) aufgewickelte Magnetband (4) kurzzeitig umgespult wird und dabei von erzeugten ersten Wickelimpulsen ($i_1$, $i_2$) ein Verhältnis der Wickeldurchmesser ($D_1$, $D_2$) ermittelt wird,

   bei welchem sodann das in der Magnetbandkassette (1) bevorratete Magnetband (4) um eine vorgegebenen Länge ($L_H$) herausgezogen wird und dabei erzeugte zweite Wickelimpulse ($j_1$, $j_2$) gezählt werden und

   bei welchem schließlich anhand ermittelter Werte der gezählten ersten und zweiten Wickelimpulse ($i_1$, $i_2$, $j_1$, $j_2$) sowie anhand vorgegebener Werte über die Dicke (d) und Geschwindigkeit (v) des Magnetbandes (4), über den Kerndurchmesser (K) der beiden Spulen (2, 3) und über die Impulszahl (u) pro Umdrehung der beiden Spulen (2, 3) eine zur Verfügung stehende Gesamtspielzeit ($T_G$) und eine verbleibende Restspielzeit ($T_R$) des Magnetbandes (4) in der Magnetbandkassette (1) von einem Mikroprozessor (19) berechnet wird.

2. Verfahren nach Anspruch 1, **gekennzeichnet durch** folgende Schritte:

   (a) Bestimmung der Anzahl von Impulsen $i_1$, welche durch kurzzeitiges Umspulen des Magnetbandes (4) innerhalb der Kassette (1) an der Aufwickelspule (3) drehabhängig entstehen,

   (b) Bestimmung der Anzahl von Impulsen $i_2$, welche durch kurzzeitiges Umspulen des Magnetbandes (4) innerhalb der Kassette (1) an der Abwickelspule (2) drehabhängig entstehen,

   (c) Bestimmung der Anzahl von Impulsen $j_1$, welche an der Aufwickelspule (3) bei einem Herausziehen des Magnetbandes (4) aus der Kassette (1) um eine vorgegebene Länge $L_H$ entstehen,

   (d) Bestimmung der Anzahl von Impulsen $j_2$, welche an der Abwickelspule (2) bei dem Herausziehen des Magnetbandes (4) aus der Kassette (1) um eine vorgegebene Länge $L_H$ entstehen und

   (e) Berechnung der zur Verfügung stehenden Gesamtspielzeit $T_G$ des Magnetbandes (4) nach der Beziehung:

$$T_G=\frac{\pi}{4dv}\left[\left(\frac{uL_H}{\pi(i_1j_2+i_2j_1)}\right)^2(i_1^2+i_2^2)-2K^2\right]$$

   wobei d eine vorgegebene Dicke des Magnetbandes (4), v eine vorgegebene Geschwindigkeit des Magnetbandes (4), K ein vorgegebener Kerndurchmesser der Auf- und Abwickelspulen (2, 3) und u eine vorgegebene Anzahl von Impulsen pro Umdrehung der Auf- bzw. Abwickelspule (2, 3) ist.

3. Verfahren nach Anspruch 1, **gekennzeichnet durch** folgende Schritte:

   (a) Bestimmung der Anzahl von Impulsen $i_1$, welche an der Aufwickelspule (3) durch kurzzeitiges Umspulen des Magnetbandes (4) innerhalb der Kassette (1) drehabhängig entstehen,

   (b) Bestimmung der Anzahl von Impulsen $i_2$, welche durch das kurzzeitige Umspulen des Magnetbandes (4) innerhalb der Kassette (1) an der Abwickelspule (2) drehabhängig entstehen,

   (c) Bestimmung der Anzahl von Impulsen $j_1$, welche an der Aufwickelspule (3) bei einem Herausziehen des Magnetbandes (4) aus der Kassette (1) um eine vorgegebene Länge $L_H$ entstehen,

   (d) Bestimmung der Anzahl von Impulsen $j_2$, welche an der Abwickelspule (2) bei dem Herausziehen des Magnetbandes (4) aus der Kassette (1) entstehen und

   (e) Berechnung der zur Verfügung stehenden Restspielzeit $T_R$ des Magnetbandes (4) nach der Beziehung:

$$T_R = \frac{\pi}{4dv}\left[\left(\frac{uL_H i_2}{\pi(i_1 j_2 + i_2 j_1)}\right)^2 - K^2\right]$$

wobei d eine vorgegebene Dicke des Magnetbandes (4), v eine vorgegebene Geschwindigkeit des Magnetbandes (4), K ein vorgegebener Kerndurchmesser der Auf- und Abwickelspulen (2, 3) und u eine vorgegebene Anzahl von Impulsen pro Spulenumdrehung ist.

**4.** Vorrichtung zur Durchführung des Verfahrens nach Anspruch 2 für ein Kassettenmagnetbandgerät mit

- einer Ladeeinrichtung (8 bis 11), welche einen Teil des in der Kassette (1) bevorrateten Magnetbandes (4) herauszieht und um eine Abtasteinrichtung (12) schlingt,
- eine Einrichtung zum Antrieb der in der Kassette (1) befindlichen Aufwickelspule (3) und Abwickelspule (2), welche an Antriebswellen der beiden Spulen (2, 3) je einen Detektor (15, 16) zur Erzeugung von Impulsen ($i_1$, $i_2$, $j_1$, $j_2$) aufweist,
- einer ersten und zweiten Zähleinrichtung (17, 18) zur Zählung der von den Detektoren (15, 16) erzeugten Impulse ($i_1$, $i_2$, $j_1$, $j_2$) und
- einem Mikroprozessor (19), welcher zunächst die an Ausgängen der ersten und zweiten Zähleinrichtung (17, 18) vorliegende Zählergebnisse der Impulse ($i_1$, $i_2$, $j_1$, $j_2$) übernimmt und welcher sodann anhand vorgegebener Werte über die Dicke d und Geschwindigkeit v des Magnetbandes (4), den Kerndurchmesser K der beiden Spulen (2, 3) und die Anzahl von Impulsen u pro Spulenumdrehung programmgesteuert nach der Beziehung:

$$T_R = \frac{\pi}{4dv}\left[\left(\frac{uL_H i_2}{\pi(i_1 j_2 + i_2 j_1)}\right)^2 - K^2\right]$$

die zur Verfügung stehende Gesamtspielzeit $T_G$ des Magnetbandes (4) berechnet.

**5.** Vorrichtung zur Durchführung des Verfahrens nach Anspruch 3 für ein Kassettenmagnetbandgerät mit

- einer Ladeeinrichtung (8 bis 11), welche einen Teil des in der Kassette (1) bevorrateten Magnetbandes (4) herauszieht und um eine Abtasteinrichtung (12) schlingt,
- einer Einrichtung zum Antrieb einer in der Kassette (1) befindlichen Aufwickelspule (3) und einer Abwickelspule (2), welche an Antriebswellen der beiden Spulen (2, 3) je einen Detektor (15, 16) zur Erzeugung von Impulsen ($i_1$, $i_2$, $j_1$, $j_2$)aufweist,
- einer ersten und zweiten Zähleinrichtung (17, 18) zur Zählung der von den Detektoren (15, 16) erzeugten Impulse ($i_1$, $i_2$, $j_1$, $j_2$) und
- einem Mikroprozessor (19), welcher zunächst die an Ausgängen der ersten und zweiten Zähleinrichtung (17, 18) vorliegende Zählergebnisse der Impulse ($i_1$, $i_2$, $j_1$, $j_2$) übernimmt und welcher sodann anhand vorgegebener Werte über die Dicke d und Geschwindigkeit v des Magnetbandes (4), den Kerndurchmesser K der beiden Spulen (2, 3) und die Anzahl von Impulsen u pro Spulenumdrehung programmgesteuert nach der Beziehung:

$$T_G = \frac{\pi}{4dv}\left[\left(\frac{uL_H}{\pi(i_1 j_2 + i_2 j_1)}\right)^2 (i_1^2 + i_2^2) - 2K^2\right]$$

die noch verbleibende Restspielzeit $T_R$ des Magnetbandes (4) berechnet.

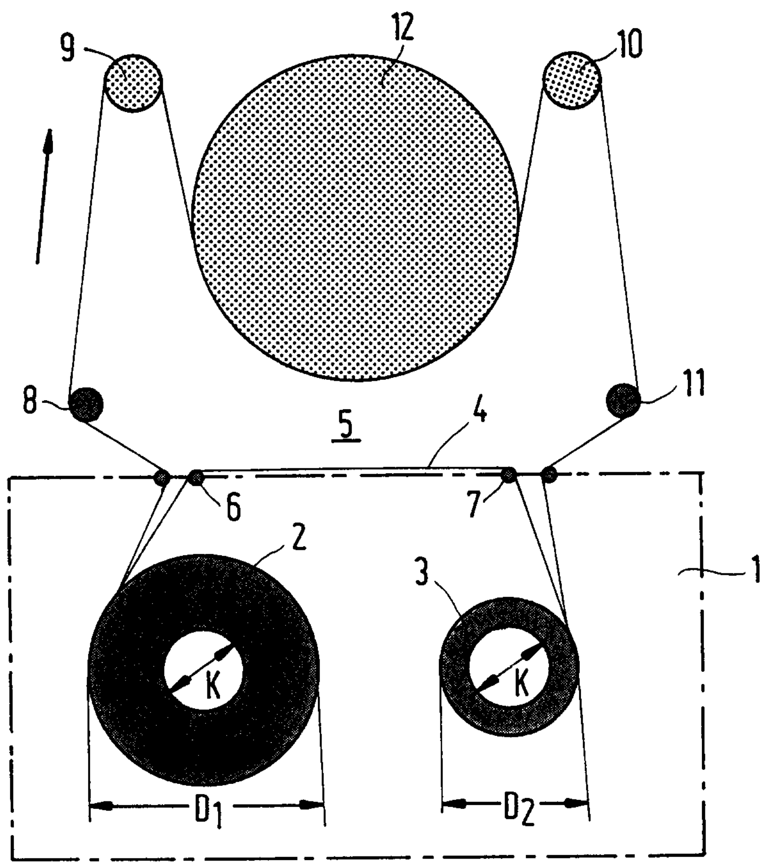


FIG.1

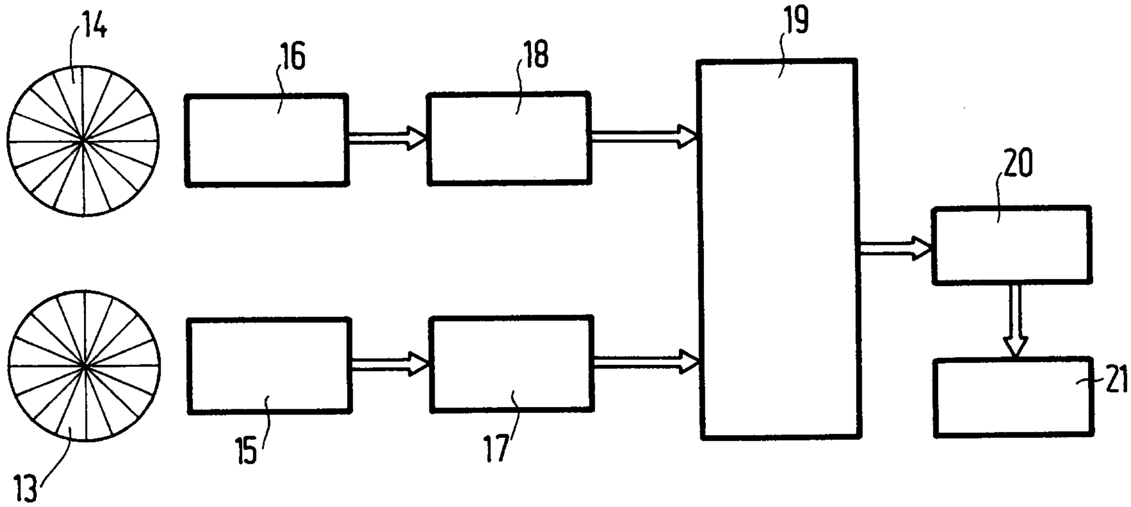


FIG.2